# EUROPEAN PATENT SPECIFICATION

(11) **EP 4 121 715 B1**
(45) Date of publication and mention of the grant of the patent: **17.04.2024**
(21) Application number: 21711284.6
(22) Date of filing: 16.03.2021
(51) Int. Cl.: G01B 11/245, G01B 11/25, G01N 21/88, G01N 21/954, E02D 29/12

(54) **APPARATUS AND METHOD FOR THREE-DIMENSIONAL MODELLING OF A SHAFT**
VORRICHTUNG UND VERFAHREN ZUR DREIDIMENSIONALEN MODELLIERUNG EINER WELLE
APPAREIL ET PROCÉDÉ POUR LA MODÉLISATION TRIDIMENSIONNELLE D'UN ARBRE

(30) Priority: 20.03.2020 BE 202005185
(43) Date of publication of application: 25.01.2023
(73) Proprietor: SPACEPAL, 2110 Wijnegem (BE)
(72) Inventor: PLANCKE, Bram, 9000 Gent (BE); BEYERS, Koen, 2990 Wuustwezel (BE)
(74) Representative: IP HILLS NV
(86) International application number: PCT/EP2021/056658
(87) International publication number: WO 2021/185823

(56) References cited:
- WO-A1-2019/162643
- US-A1- 2008 068 601
- US-A1- 2018 348 116

## Description

### Technical Field

The present invention generally relates to modelling a shaft, for example a manhole of a sewage system. The invention provides in particular a solution allowing for an accurate and qualitative modelling of a shaft, by means of a system which is easily transportable and flexible with respect to its choice of suspension.

### Background of the invention

Sewage systems consist of an extended underground network of sewage pipes. Manholes and shafts extending downward from the ground surface provide access to the sewage pipes. The condition of such manholes should be regularly inspected, in order to prevent for example ground subsidence at the level of manholes. Moreover, more and more operators make an inventory of the complete sewage system in order to plan renovations and preventive maintenance. Not only the position of the manholes should be included in such inventories, but also important parameters such as inner dimensions. The inspection and measuring of the manholes is often done manually, where a worker descends in the manhole in order to perform inspection and measurement. Such a manual method is time consuming and implies substantial safety risks. The need for a person to descend the manhole may be avoided by using a device which is lowered in the manhole. There exist for example devices on the market which allow to take pictures of the interior of the manhole by means of lenses, often fisheye lenses. An example is given in WO 2019/162643, wherein individual images taken by a camera are combined in a composite image of the internal surface of a conduit using image stitching. However, with such photogrammetry, larger and irregularly shaped manholes are depicted distorted, or the images are exposed insufficiently. Such devices may therefore be deployed for a rough inspection of the manhole, but due to the lack of quality of the images they are insufficiently reliable to derive dimensions from. An accurate parameterization is therefore not possible by means of such devices.

Thus, there is a general need for devices which are not limited to photogrammetry, but allow for modelling the interior of the manhole accurately.

A number of solutions are known in the state of the art focused on modelling manholes in 3D. In US2016/0249021, for example, a device is described for 3D imaging and inspection of a manhole. The solution comprises a sensor head having 3D sensors, which illuminate the object to be measured by means of a laser and then determine distances by analyzing the reflected light. Use is made, for example, of a time-of-flight camera or of the projection of a structured light pattern by means of a structured light camera. Cables are attached to three places at the top of the sensor head, which allow the sensor head to be lowered in the shaft. The three cables are attached to a box at their other ends, while the box is typically mounted on a system in a vehicle. Information regarding the height position of the sensor head in the shaft is also collected, for example by means of an encoder by which the number of revolutions at the level of the cable suspensions is counted. However, this solution implies a number of disadvantages. First, the sensor technique used is sensitive to overexposure, so that at a position close to the ground surface or the wall of the shaft proper modelling may possibly not be obtained or a shielding from the outside light should be provided. Additionally, the suspension system is adapted to mounting in a vehicle, making the system cumbersome to move and making it impossible for certain shafts to be reached. Finally, the sensor head requires the combination with a specific suspension system; a telescopic suspension system, for example, does not allow for an encoder to count the number or revolutions, or replacing three cables by one suspension point would imply too much movement of the sensor head. In other words, the assembly is not very flexible. A similar type of solution is found in US2008/0068601, wherein a projected laser ring is used to extract dimensional data of the surface of a manhole, but the delivery system needs to provide sufficient stiffness and stability.

Furthermore, https://cuesinc.com/equipment/spider-scanner proposes a device for 3D manhole scanning. This solution allows for modelling a manhole by means of a point cloud, which is generated by means of stereoscopic cameras and a pattern generator. Additional illumination may be provided as well by switching on LED lamps. Such technology renders the image quality less sensitive to over- or underexposure. The sensor head having cameras is attached to an extendable bar, and the bar is attached to a stand. The stand renders the system better movable than a system which should be mounted in a vehicle. However, also this system offers little flexibility with respect to the suspension, wherein the sensor head should always be combined with the telescopic arm. Although the rigid arm limits the movements of the sensor head while descending, it also limits the maximum extended length and therefore the maximum depth to be measured. Moreover, such a system may be cumbersome in use, since time is always required to extend the telescope with additional pieces, and continuous scanning is therefore not possible. This increases the time and operations necessary per recording. Finally, the telescopic arm renders the assembly heavy and not very compact, especially when large extended lengths are desired. This limits the portability of the system.

It is an object of the present invention to describe an apparatus overcoming one or multiple of the described disadvantages of solutions of the state of the art. More specifically, it is an object of the present invention to describe an apparatus allowing for an accurate and quantitative modelling of a shaft, by means of a system which is easily portable and flexible with respect to the choice of suspension.

### Summary of the Invention

According to the present invention, the objects identified above are realized by an apparatus for modelling a shaft in 3D, as defined by claim 1, comprising:
- a sensor head adapted to be axially moved within the shaft by means of a suspension system, the sensor head comprising:
   ∘ 3D sensors placed along the circumference of the sensor head, adapted to take images along an inner circumference of the shaft, each of the images comprising depth information about the part of the inner surface of the shaft within the field of view of the respective 3D sensor;
   ∘ a measuring apparatus adapted to determine a measured height position of the sensor head within the shaft;
- a processing unit comprising:
   ∘ a placement module configured to place the images in a virtual space, based on the measured height position and the positioning of the image sensors on the sensor head, resulting in a rough placement of the images, thereby obtaining a first reconstruction of the inner surface of the shaft;
   ∘ a correction module configured to correct the rough placement, based on comparing overlapping images and/or based on a measured deviation of the sensor head with respect to a central axis of the shaft, resulting in a 3D model of the shaft.

In other words, the invention relates to an apparatus for modelling a shaft in 3D. The shaft is an enclosed space limited by walls, and defined by an axial direction. Typically, the shaft forms an elongated opening, and the walls define a substantially axially symmetrical space. The height within the shaft is measured according to the axial direction. A cross section of the shaft may adopt various shapes, such as circular, square, rectangular, etc. A shaft is for example a manhole or sewer shaft of a sewage system, extending from the ground level to the underground pipeline. In another example the shaft is a chimney, pipeline, tank, pipeline shaft, elevator shaft, etc. Modelling in 3D or modelling three-dimensionally refers to obtaining a 3D model of the shaft, comprising a large number of points which are placed in a three dimensional virtual space. The 3D model for example allows to, by means of a computer, visualize images of the inner surface of the shaft. A 3D model may also allow to derive parameters such as dimensions.

The apparatus comprises a sensor head adapted to be moved axially within the shaft by means of a suspension system. A suspension system is a system allowing the sensor head to be attached thereto, and allowing to move the sensor head according to the axial direction of the shaft. A suspension system comprises for example a stand wherein a cable is attached in the top allowing to move the sensor head up and down according to the axial direction. In another embodiment, the suspension system comprises a stand having a bar or telescopic arm to move the sensor head. In yet another embodiment, the suspension system comprises multiple cables, for example to attach the sensor head at multiple points to a box mounted in a vehicle. In yet another embodiment, the suspension system comprises only a cable, allowing to manually move the sensor head axially in the shaft.

The sensor head comprises 3D sensors placed along the circumference of the sensor head, adapted to take images along an inner circumference of the shaft. Thus, the image sensors are placed on the sensor head, at various circumferential positions of the sensor head. The 3D sensors may be placed on the sensor head all at the same level, or their height position may differ between sensors. For example, a calibration is used to determine the height position on the sensor head of sensors. The 3D sensors are adapted to take images along an inner circumference of the shaft. This means that every sensor has a certain field of view and is adapted to observe the environment with a certain viewing angle according to the circumferential and height direction. Thus, a 3D sensor has at a certain position of the sensor head in the shaft a view of a certain part of the inner surface of the shaft, namely a part of a certain dimension along the height and a certain dimension along the circumference of the shaft. The number of 3D sensors, their positioning on the sensor head and their viewing angle are such that the image sensors together have a view on the total circumference of the shaft.

A 3D sensor is adapted to take images. Taking images is defined broadly, in the sense that it refers to collecting data about the part of the inner surface of the shaft which is within the field of view of the 3D sensor. In particular, the 3D sensor is adapted to collect depth information about the part of the inner surface of the shaft within the field of view of that 3D sensor. In the context of an image sensor placed along the circumference of the sensor head, collecting depth information refers to measuring distances from the sensor to a specific point at the wall of the shaft, not to determining a depth in the shaft according to the axial direction. Additionally, color information may be collected as well by the 3D sensor. In an embodiment, the 3D sensor is a 3D camera, using 3D imaging technology. A 3D sensor uses for example stereovision technology, where two cameras take images from different angles to allow depth information to be derived. In another example, a 3D sensor is adapted to take images of a projected structured light pattern, where depth information may be derived from the deformations of the pattern in these images. In yet another example, the 3D sensor uses a combination of stereovision technology and the projection of a structured light pattern.

The sensor head comprises a measuring apparatus adapted to determine a measured height position of the sensor head within the shaft. A height position refers to a position of the sensor head according to the axial direction of the shaft. The measuring apparatus may be adapted to perform a height measurement directly in the shaft, such as for example a downwards pointing one dimensional laser on the sensor head. In another embodiment, the measuring apparatus does not measure a height directly, but the measurement of the measuring apparatus allows to derive a height position of the sensor head. For example, a downwards pointing or upwards pointing 3D sensor may be used to derive the height position, or an Inertial Measurement Unit may be used to track the path followed by the sensor head, wherein such path includes a measured height position. The measuring apparatus is comprised in the sensor head, meaning that it is positioned on or in the sensor head, the latter being axially moved in the shaft. This implies that the height measurement is performed by the sensor head itself, and is independent of the suspension system used.

The apparatus comprises a processing unit. A processing unit is for example a computer, CPU, calculating unit, processor, microprocessor, etc. The processing unit may be located on or in the sensor head, or may form a separate unit. In the latter case, components will be present to forward the rough data measured by the sensor head to the processing unit, through a wireless or wired connection. In the case the processing unit is located on or in the sensor head, processing of the collected rough data occurs already there, after which results may be forwarded to an external device, through a wireless or wired connection. In another embodiment, processing occurs partially on the sensor head and partially in an external unit, so that the processing unit comprises physically separated unit.

The processing unit comprises a placement module configured to place the images in a virtual space, based on the measured height position and the positioning of the image sensors on the sensor head, resulting in a rough placement of the images. A virtual space may for example be a three-dimensional space, defined by x, y and z coordinates. Placing an image in the virtual space refers then to assigning an (x, y, z)-coordinate to the points forming the image. The rough placement of an image in the virtual space occurs on the one hand based on the positioning of the image sensors on the sensor head. Each image sensor has for example a certain circumferential position on the sensor head, and a certain viewing angle according to the circumferential direction. From this, it may be deduced at which circumferential position in the virtual space the image taken by sensor should be placed. On the other hand, the rough placement of an image in the virtual space occurs based on the measured height position. An image taken at a moment in which the sensor head was at a certain height position, is thus placed at a corresponding height position in the virtual space. Through the rough placement of the images, a first reconstruction of the inner surface of the shaft is obtained, based on a rough estimation. Typically, the images placed according to the rough estimation overlap, according to the circumferential direction, and according to the height direction.

The processing unit comprises a correction module configured to correct the rough placement, based on comparing overlapping images and/or based on a measured deviation of the sensor head with respect to a central axis of the shaft. Correcting the rough placement implies that the placement of images in the virtual space may be adjusted slightly, in order to obtain a more accurate representation of reality.

In an embodiment, the correction occurs based on comparing overlapping images. Overlapping images are images which overlap in the rough placement, according to the height direction and/or the circumferential direction. Use is made from, for example, an Iterative Closest Point Algorithm to search for similar features in overlapping images, and to adjust the placement of the images such that corresponding features coincide as closely as possible. Similar features may for example be searched for in the color information and/or the depth information present in the overlapping images. For example, the circumferential position of the images is corrected in that way, in order to take into account rotations of the sensor head about its own axis during measurement. In such an embodiment, the first reconstruction is based on tracking the sensor head, which may be solely based on height tracking or may include a more sophisticated tracking based on measuring the complete path followed by the sensor head. Afterwards, a correction is done based on an imaging algorithm or computational imaging technique, i.e. based on comparing overlapping images.

In another embodiment, the correction occurs based on a measured deviation of the sensor head with respect to a central axis of the shaft. The sensor head e.g. comprises an Inertial Measurement Unit, IMU, allowing to reconstruct the path followed by the sensor head, thereby determining deviations of the sensor head with respect to the central axis of the shaft. Such deviations occur for example when the sensor head sways. The detected deviations allow to reconstruct from which orientation of the image sensor the image was taken, and to correct in that way the placement of the image. Optionally, an IMU may also allow to detect rotations of the sensor head about its own axis, and to correct in that way the placement of the images for this. In such an embodiment, the first reconstruction as well as the applied correction are based on tracking the sensor head, wherein such tracking includes measuring a height position as well as measuring deviations with respect to a vertical axis.

In yet another embodiment, the correction occurs based on comparing overlapping images and a measured deviation of the sensor head with respect to a central axis of the shaft. The order of these two corrections may vary. Measurements of an IMU are for example be used to correct the placement of the images for swaying, and an ICP algorithm may be used to correct the placement of the images for rotations. In another example, measurements of an IMU are used to correct the placement of the images for swaying of the sensor head and rotations of the sensor head about its own axis. An ICP algorithm may then be employed to adjust the obtained placement for outliers, or certain abnormalities or inaccuracies in the IMU measurements.

The apparatus according to the invention provides multiple advantages. First, the 3D sensors on the sensor head are chosen according to the needs. The use of advanced 3D sensors allows for an accurate modelling of high quality. Moreover, by using multiple sensors along the circumference of the sensor head, the sensor head does not have to rotate during the axial movement in the shaft. Therefore, moving parts are avoided, which contributes to the robustness of the apparatus. A proper first placement of the images in the virtual space may also be obtained based on the circumferential position of the image sensors on the sensor head. This avoids the need for a computationally intensive algorithm to join images along the circumference.

Furthermore, all measuring components, such as the 3D sensors and the measuring apparatus for the height position, are comprised within the sensor head. This means that the sensor head may function completely independently of the type of suspension, which is not the case when for example an encoder is used to count the number of axis rotations in unwinding a cable. In other words, the sensor head may be combined with any type of suspension system. This renders the apparatus to be employable flexibly.

Additionally, the correction module allows to correct the rough placement of the images, for example for swaying of the sensor head during the descent in the shaft, or for rotations of the sensor head about its own axis. A good quality of the modelling is hereby ensured, even if a more free suspension is used, such as a cable attached to the sensor head at only one point, or a manual lowering of the sensor head into the shaft. In other words, it is not a requirement to use a rigid suspension system such as a bar or a telescopic arm, which is heavy and more cumbersome in use. This allows for a compact and lightweight design, contributing to the portability and user-friendliness of the assembly. In summary, despite the increased flexibility due to the suspension-independent sensor head, a reliable and accurate 3D modeling is guaranteed under all conditions.

Finally, corrections may be performed on the rough placement of the images in various ways within the correction module. Using an IMU may for example allow for an accurate tracking of the sensor head, while using computational imaging for the corrections saves the cost of adding an IMU to the sensor head. In another example an IMU is used for the first placement of the images, and then an ICP algorithm for a correction of the placement, leading to an efficient and reliable functioning of this ICP algorithm is obtained. Indeed, the algorithm may depart from a first rough placement, so that only limited adjustments are necessary. The ICP algorithm may also be employed as a backup position, for example in circumstances where the IMU does not function well or gives abnormal measurements. This further contributes to the reliability and quality of the modelling.

Optionally, as defined by claim 2, the apparatus comprises a second measuring apparatus adapted to determine the measured deviation by reconstruction of the path followed by the sensor head. The measuring apparatus is for example an IMU or inertial measurement unit allowing to measure which path, for example in (x, y, z)-coordinates, the sensor head followed during the descent into the shaft from measuring acceleration and rotation. The measured deviation of the sensor head with respect to the central axis may be derived from this path followed. Such a second measuring apparatus allows to take swaying of the sensor head into account in a reliable and accurate manner, contributing to a free choice of suspension without comprising on the quality of the modelling.

Optionally, as defined by claim 3, the placement module is configured to place the images in the virtual space based on the path followed by the sensor head, and the correction module is configured to correct the rough placement based on comparing overlapping images. The sensor head comprises for example an Inertial Measurement Unit or inertial measurement unit allowing to determine which path the sensor head followed during the descent into the shaft. This path is then used, together with the circumferential position of the sensors on the sensor head and the measured height position, to perform a first placement of the images in the virtual space, being a rough placement. For example, the rough placement already takes into account the swaying of the sensor head and rotations about its own axis. Thus, the rough placement and first reconstruction are based on an advanced tracking of the sensor head. This rough placement is then corrected, by comparing overlapping images. An Iterative Closest Point Algorithm is for example used to search for similar features in the overlapping images, and to adjust the placement of the images such that corresponding features coincide as closely as possible. The rough placement is for example adjusted for outliers, or certain abnormalities or inaccuracies in the IMU measurements. This contributes to a reliable modelling, and a lightweight system with free choice of suspension.

Optionally, as defined by claim 4, the second measuring apparatus is an inertia measuring unit and/or the measuring apparatus comprises an accelerometer, and/or the measuring apparatus comprises a gyroscope, and/or the measuring apparatus comprises a magnetometer. This allows to take into account swaying of the sensor head and rotations about its own axis when placing the images in the virtual space.

Optionally, as defined by claim 5, the correction module is configured to correct the placement of the images on a circumferential position in the virtual space, based on comparing images overlapping in the rough placement in the height direction. After rough placement of the images in the virtual space, these overlap for example partially in the height direction. In other words, there is an uninterrupted circumference of overlapping images in the virtual space. In these overlapping parts may then be searched for similar characteristics, by means of an Iterative Closest Point Algorithm. Based on this, the circumferential position of the images in the virtual space is adjusted such that corresponding features coincide as closely as possible. In this way, a placement is obtained taking into account rotations of the sensor head about its own axis. This contributes to an accurate modelling, also when a suspension is used where rotations of the sensor head are possible.

Optionally, as defined by claim 6, the correction module is configured to correct the rough placement by minimizing the difference between point clouds. An Iterative Closest Point Algorithm is for example use, where images are corrected to obtain the best possible coincidence of similar features in overlapping images. Similar features may for example be searched for in the color information and/or the depth information present in the overlapping images.

Optionally, as defined by claim 7, the 3D sensors use 3D imaging technology. An image sensor is for example a 3D camera. 3D imaging technology refers to technology by means of which apart from color information, also depth information is collected. A 3D sensor uses for example stereovision technology, by means of which two cameras take images from different angles to allow to derive depth information. In another example, a 3D sensor is adapted to take images of a projected structured light pattern, where depth information may be derived from the deformations of the pattern in these images. In yet another example, a 3D sensor uses a combination of stereovision technology and the projection of a structured light pattern. The use of 3D imaging technology has the advantage that an accurate modelling is possible, without deformations in the images, and with the possibility to derive dimensional parameters.

Optionally, as defined by claim 8, the 3D sensors use a combination of stereovision technology and the projection of a structured light pattern. Stereovision technology, or stereoscopy, refers to the use of two cameras, which take images under different angles. Image processing afterwards allows to detect common characteristics in both images and to derive depth information or distance information from this. Stereovision technology has as the advantage that it keeps working well in circumstances where a lot of light is present, for example from light coming from the top of the manhole. This contributes to a good modelling of the shaft near the ground level, and avoids the need to provide a shielding from the outside light. The projection of a structured light pattern refers to a technology such as structured light. Such a system has except for a camera also a light source, such as a laser, which allows to image a pattern on an object. The regularity of the pattern is disturbed when projecting by irregularities in the surface of the object, and depth information about the surface may then be derived from these deformations, visible in images taken by the camera. The projection of a structured light pattern has the advantage that this technology keeps working well in conditions where little light is present, such as at the bottom of the shaft, or when modelling surfaces where few characteristics are distinguishable. The use of 3D sensors allowing a combination of stereovision technology and the projection of a structured light pattern has as advantage that in all light conditions, both under- and overexposure, a good modelling is obtained. This contributes to a high quality and robust modelling.

Optionally, as defined by claim 9, the 3D sensors are placed on the sensor head according to a same height position on the sensor head. This contributes to a simple placement of images in the virtual space, where per height position of the sensor head, a full inner circumference of the shaft is mapped.

Optionally, as defined by claim 10, the measuring apparatus is adapted to determine the measured height position based on 3D imaging technology. The measuring apparatus is for example a downwards pointing 3D image sensor, directed towards the end of the shaft, away from the ground level. Thus, during the measurement operation, the 3D image sensor is directed towards the bottom end of the shaft. Such a 3D image sensor allows to take a 3D image of the bottom of the shaft, and comprises for example a processor adapted to derive the height position from the taken image by image processing. The use of 3D imaging technology allows an accurate and reliable measurement, because less noise is present in the measurement, and fewer disturbances appear due to a reflecting water surface at the bottom, than when for example a downwards pointing one-dimensional laser is used. In another embodiment, the measuring apparatus is an upwards pointing 3D image sensor, directed towards the shaft end located at the ground level. Thus, during the measurement operation, the 3D image sensor is directed towards the top end of the shaft. By using such an upwards pointing sensor, a more reliable reference point for the height measurement may be obtained, as a static environment is observed by the sensor, and no disturbances due to a moving reference point occur. The latter disturbances may possibly be present when using a downwardly pointing 3D sensor, e.g. due to the observance of a moving or flowing water surface at the bottom of the shaft.

Optionally, as defined by claim 11, the processing unit forms a physical unit with the sensor head. This means that a processing of the collected rough data may take place already on the sensor head, such as placing the images in the virtual space, as well as a correction of this rough placement. The results may then be forwarded to an external device, such as a tablet, mobile phone or computer, through a wired or wireless connection. Processing the data on the sensor head itself has as advantage that the amount of data which has to be sent to the external device is more limited than when all rough data should be forwarded. This reduces the requirements regarding bandwidth of the wireless or wired connection, and contributes to making results available to the user in real time.

Optionally, as defined by claim 12, the processing unit is adapted to determine dimensional parameters based on the placement of the images in the virtual space, the dimensional parameters being derived from the 3D model of the shaft. This means that modelling by means of the apparatus allows for parametrization, where for example sizes may be derived from the 3D model of the shaft. An interface is for example made available where the user may indicate the parameters to be determined. The software allowing to determine the dimensional parameters to be determined and to be depicted may be implemented completely on the sensor head, or may be installed on an external device, such as a tablet, mobile phone or computer.

According to a second aspect of the present invention, the objects identified above are realized by a system for modelling a shaft in 3D, as defined by claim 13, comprising:
an apparatus according to the first aspect of the invention;
- a suspension system adapted to move the sensor head axially within said shaft, comprising a mobile component chosen from the group of: a bar, a telescopic arm, or one or multiple cables, wherein de mobile component is adapted to be manually held in position or to be connected to a movable positioning system during the axial movement of the sensor head.

The suspension system comprises a mobile component such as a bar, a telescopic arm, or one or multiple cables. Typically, the sensor head is attached to this mobile component at one end. In an embodiment, the other end of the mobile component is held manually during the descent of the sensor head in the shaft. In another embodiment, this other end is connected to a movable positioning system. A positioning system is a system allowing to position the sensor head on the central axis of the shaft. A movable positioning system is for example a stand, a tripod, a system mounted in a vehicle, etc.

According to a third aspect of the present invention, the objects identified above are realized by a method for modelling a shaft in 3D, as defined by claim 14, comprising:
- moving a sensor head axially within the shaft by means of a suspension system;
- taking images by means of 3D sensors, wherein the 3D sensors are placed along the circumference of the sensor head and are adapted to take the images along an inner circumference of the shaft, and wherein each of the images comprises depth information about the part of the inner surface of the shaft within the field of view of the respective 3D sensor;
- determining a measured height position of the sensor head within the shaft by means of a measuring apparatus comprised within the sensor head;
- placing the images in a virtual space based on the measured height position and positioning the image sensors on the sensor head, resulting in a rough placement of the images, thereby obtaining a first reconstruction of the inner surface of the shaft;
- correcting the rough placement based on comparing overlapping images and/or based on a measured deviation of the sensor head with respect to a central axis of the shaft, resulting in a 3D model of the shaft.

### Brief Description of the Drawings

Fig. 1 shows an apparatus for modelling a shaft in 3D, according to an embodiment of the invention.
Fig. 2 and Fig. 3 illustrate a system for modelling a shaft in 3D, according to different embodiments of the invention, more specifically where various possible suspension systems are used.
Fig. 4 illustrates in a schematic manner a sensor head according to the invention, and the use of this sensor head in measuring a shaft. Fig. 4a and Fig. 4b give an axial cross section and a transverse cross section, respectively.
Fig. 5 gives a block diagram illustrating the data flows from a sensor head to a processing unit, and of the various modules in a processing unit, according to an embodiment of the invention.
Fig. 6 illustrates the descent of a sensor head into a shaft, and the possible occurrence of rotations and swaying herein.
Fig. 7 illustrates how a processing unit according to an embodiment of the invention takes rotations of the sensor head about its own axis and swaying of the sensor head while measuring the shaft into account.
Fig. 8 gives a block diagram illustrating the processing of rough data to dimensional parameters and various other possibilities in a user interface, according to an embodiment of the invention.

### Detailed Description of the Embodiments

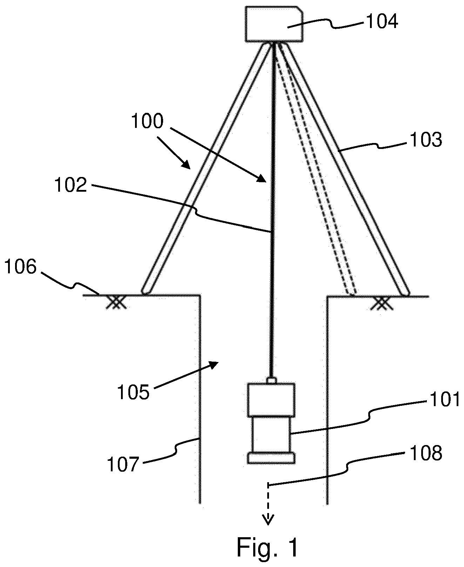

Fig. 1 shows an apparatus for modelling a shaft 105 in 3D, according to an embodiment of the invention. In the application shown in Fig. 1, the shaft 105 is a manhole of a sewage system, or sewer shaft, extending from the ground level 106 to an underground sewage pipeline. The height of the shaft 105 is measured according to an axial direction 108. In the embodiment of Fig. 1, the shaft 105 has a cylindrical wall 107, having a cross section which is symmetrical axially, and which is constant over the height of the shaft 105. Typically, the vertical shaft 105 connects to a horizontal pipeline, where the wall 107 is thus interrupted. Other forms are however possible, such as a square or rectangular cross section of the shaft, or a cross section varying over the height of the shaft. Other application are possible as well, where the shaft 105 is for example a chimney, pipeline, tank, pipeline shaft, elevator shaft, etc.

The apparatus comprises a sensor head 101 and a processing unit 500. The processing unit 500, not visible on Fig. 1, is located within the sensor head 101, or within a separate device, or is divided over the sensor head 101 and another device. The sensor head 101 is adapted to be moved within the shaft 105 by means of a suspension system 100, according to the axial direction 108. In the embodiment of Fig. 1 the suspension system 100 comprises a stand 103 and a cable or bar 102. Fig. 1 shows the setup during measuring the shaft 105, where the stand 103 is placed on the ground level 106, and the sensor head 101 is lowered into the shaft 105 by means of the bar or cable 102. After the measurement is finished, the sensor head 101 is detached and the stand 103 is closed, so that the pieces may be easily transported to another location. Fig. 1 shows that both the suspension system 100 as the sensor head 101 are compact and light, rendering the assembly easily movable and portable. In the embodiment of Fig. 1 the sensor head 101 has a weight of around 5 kg.

In the embodiment of Fig. 1 the system comprises also technology for geo-positioning and wireless communication. Geo-positioning, for example GPS localization, allows to register the geo location of the measurement automatically. Wireless communication, for example WiFi communication, radio communication or Bluetooth, allows to forward measured data wirelessly. In the embodiment of Fig. 1, the technology for geo-positioning and wireless communication is accommodated in a separate housing 104, which is mounted on the stand. However, other embodiments are possible, where this technology is for example accommodated in or on the sensor head 101.

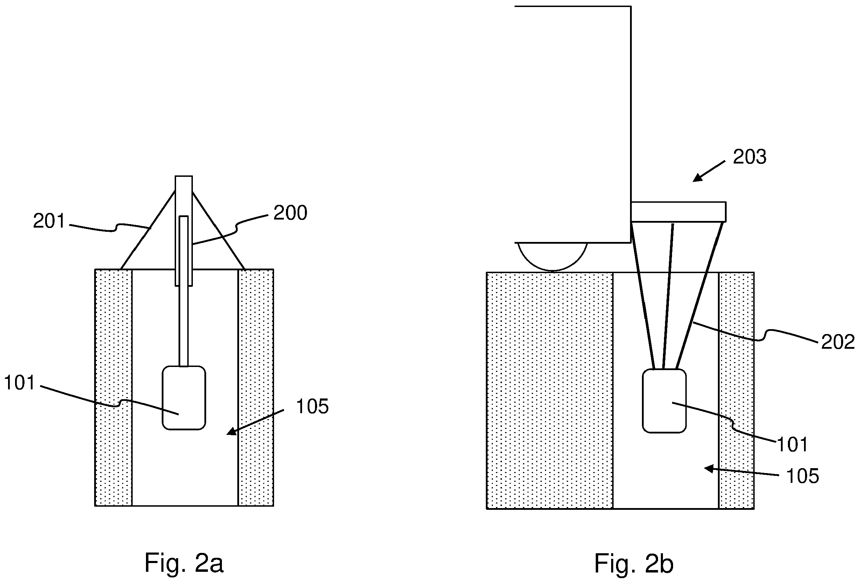

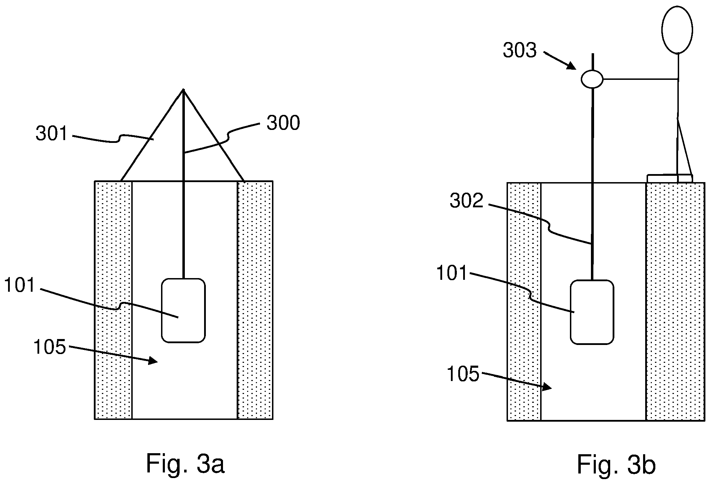

Fig. 2 and Fig. 3 illustrate how the sensor head 101 may be combined with various suspension systems. In Fig. 2a, the suspension system comprises a stand 201 and a telescopic arm or extendable bar 200. In Fig. 2b, the sensor head 101 is mounted in a vehicle suspended on a system 203 at three suspension points. The figure shows three cables 202, but a different number of cable and/or suspension points is also possible. The suspension systems shown in Fig. 2 contribute to limiting the movement of the sensor head 101 during the descent into the shaft 105. However, Fig. 3 illustrates that the sensor head 101 may also be combined with a more free suspension, where swaying and rotations about the own axis of the sensor head 101 possibly occur. In Fig. 3a, the suspension system comprises a stand 301, where the sensor head 101 is suspended through a cable 300, for example a steal cable. In Fig. 3b, the sensor head 101 is attached to a cable 302 at one end, and the cable 302 is held by a person, see 303, in order to lower the sensor head 101 manually into the shaft 105. Such free choice of suspension allows for example to market a standard version, but also to realize solutions tailored to a user or operator. For example, if a customer already disposes over a suspension system for fall prevention when a person descends in a manhole, then this suspension system may easily be reused in combination with the sensor head 101. Also note that possible embodiments are not limited to the one presented in Fig. 2 and Fig. 3. For example, a cable system 203 in a vehicle may be combined with a single cable 300, or the sable 300 may be replaced by a bar.

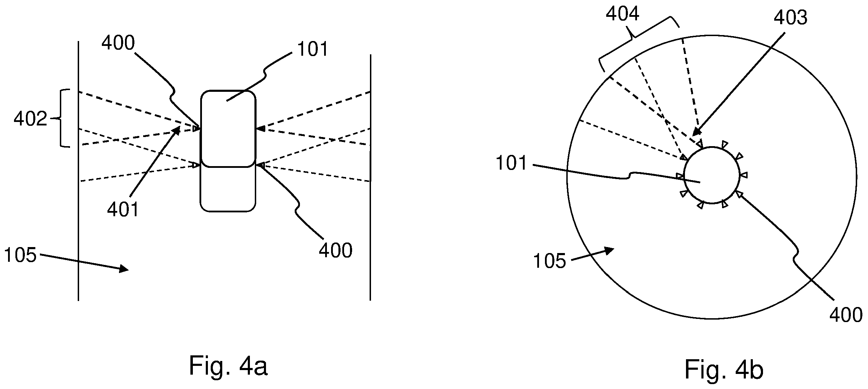

Fig. 4 illustrates schematically the use of the sensor head 101 in measuring a shaft 105. The transverse cross section of Fig. 4b shows that the sensor head 101 comprises ten image sensors 400 or 3D sensors 400, placed equidistantly about the circumference of the sensor head 101. The axial cross section of Fig. 4a shows that the image sensors 400 are placed at a same height position on the sensor head 101. The image sensors 400 on Fig. 4 are presented schematically, without wishing to present a realistic shape or dimensions of the sensors. Other embodiments are also possible, for example where a different number of image sensors 400 is present, or their height position on the sensor head 101 differs between sensors.

Fig. 4 illustrates that each image sensor 400 has a certain viewing angle, according to the height position and according to the circumferential direction. Fig. 4a shows that under a viewing angle 401, an image sensor 400 has a view on a part of the inner surface of the shaft 105 over a height 402. Analogously, Fig. 4b shows that under a viewing angle 403, an image sensor 400 has a view on a part of the inner circumference of the shaft 105 over a tangential distance 404. Together, the image sensors 400 have a view of 360° on a complete inner circumference of the shaft 105, where individual images overlap partly according to the circumferential direction, as may be seen in Fig. 4b. The presence of ten sensors 400 over the circumference of the sensor head 101 allows that sensors 400 with a limited viewing angle 403 are applied, typically resulting in a higher resolution of the images.

Images are made by the image sensors 400 during a descent of the sensor head 101 into the shaft 105. In this way, a ring of images becomes available within the shaft 105 at different height positions of the sensor head 101. No rotation of the sensor head 101 is needed for this, so that the presence of moving parts is avoided. Typically, the time point at which the respective image is taken is also registered by an image sensor 400.

Fig. 4a shows that typically the ring of images made at a certain height position of the sensor head 101 overlaps with the ring of images made at a next height position. The axial movement of the sensor head 101 may be continuous, where images are taken at a certain time interval, or the movement of the sensor head 101 may be discontinuous, where the axial movement is stopped in between. In the latter case, image sensors 400 may be controlled sequentially, wherein at a given height position of the sensor head the image sensors 400 each in turn take their image and forward it. Such control may offer a solution in case a large data flow is not possible.

In an embodiment of the invention, the image sensors 400 are 3D sensors using a combination of stereovision technology and the projection of a structured light pattern. An 3D sensor 400 comprises herein two cameras, which take images under different angles, and a light source such as a laser, allowing to project a pattern. The 3D sensor also comprises a processor allowing to reconstruct the 3D image through image processing algorithms. A 3D sensor 400 is for example an Intel RealSense Depth Camera D415, or a similar technology. A 3D sensor 400 may also comprise an RGB sensor, to collect color information. The combination of stereovision and structured light allows to obtain an accurate and qualitative modelling in all light conditions. However, other embodiments are also possible, where a different type of 3D sensor is used. Optionally, the sensor head 101 may also contain one or more light sources, to illuminate the wall of the shaft 105 while taking images.

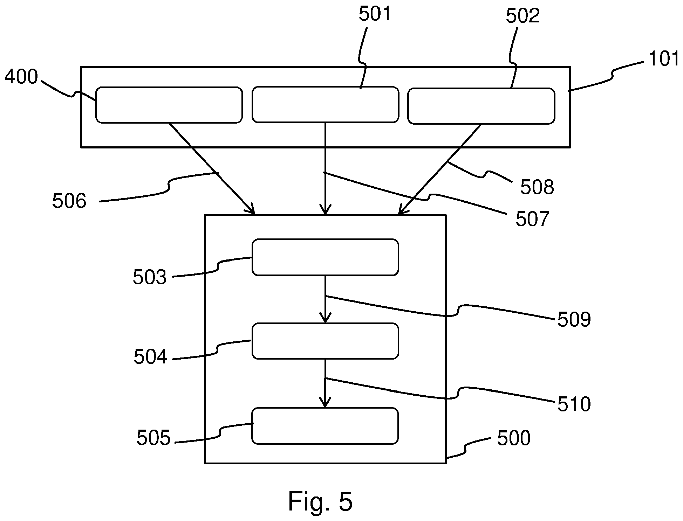

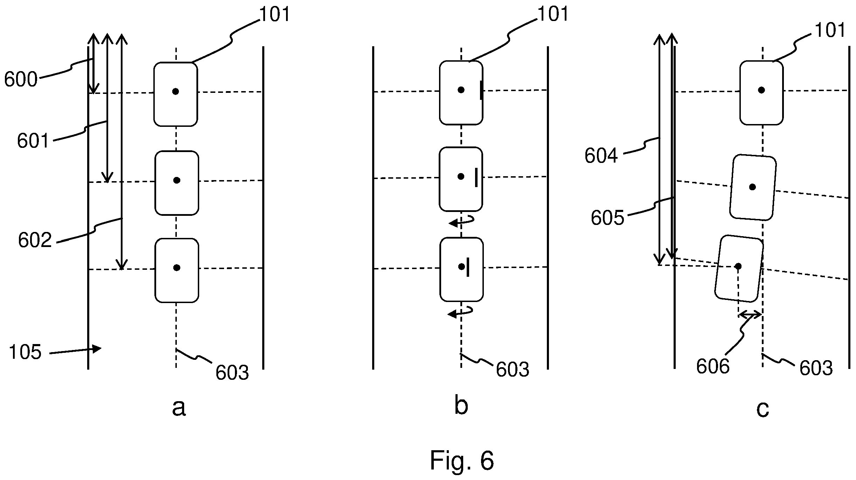

The sensor head 101 comprises furthermore a measuring apparatus 501 adapted to determine a measured height position 507 of the sensor head 101 within the shaft 105, as presented schematically in Fig. 5. In the embodiment of Fig. 1, the measuring apparatus 501 is mounted at the bottom of the sensor head 101, so that it is directed towards the bottom of the shaft 105 while measuring. The measuring apparatus 501 is for example a one-dimensional laser, or a 3D image sensor having a processor to derive the measured height position from the image of the bottom. In another embodiment, the measuring apparatus 501 may be mounted at the top op the sensor head 101, being directed towards the top of the shaft 105 while measuring. In Fig. 6, different measured height positions 600, 601, 602 are depicted schematically. Typically, the measuring apparatus 501 also registers the time at which the respective height position 600, 601, 602 is measured. Optionally, in addition to the measuring apparatus 501, a detector may also be present on the sensor head 101, which stops the descent when the sensor head 101 has almost reached the bottom. If necessary, the recording of images and measurements may then be stopped automatically.

In the embodiment of Fig. 5, the sensor head 101 also comprises a second measuring apparatus 502, adapted to determine a measured deviation 508 of the sensor head 101 with respect to a central axis 603 of the shaft 105. The second measuring apparatus 502 is for example an inertia measure unit or Inertial Measurement Unit, IMU, allowing to measure rotations and accelerations. The IMU allows for example to reconstruct the path followed by the sensor head 101, and the measured deviation 508 may be derived from this. In an embodiment, the measuring apparatus 501 and the second measuring apparatus 502 may be combined in a single device, the latter device being adapted to track the position of the sensor head 101 in x, y, and z direction.

Fig. 5 shows that the images 506 taken by the 3D sensors 400, the measured height position 507 resulting from the measuring apparatus 501, and the measured deviation 508 resulting from the second measuring apparatus 502, are transferred to a processing unit 500. The times corresponding to the respective measurements are transferred to the processing unit 500 as well. An API is for example used to read the information coming from the image sensors 400 and the measuring apparatus. The processing unit 500 also disposes over information regarding the circumferential position and height position of the image sensors 400 on the sensor head 101. The exact position of the image sensors 400 on the sensor head 101 is for example determined by means of a calibration, prior to measuring the shaft 105. An automated calibration tool may for example be used, where the sensor head 101 takes images in a test environment provided with reference points, and the exact position of each sensor 400 on the sensor head 101 is determined from this.

The processing unit 500 in Fig. 5 comprises a placement module 503, a correction module 504 and a visualization module 505. For example, a first placement of the images in the virtual space is performed by the placement module 503 by means of the images 506, the measured height position 507 and the information coming from the IMU 502, resulting in a rough placement 509. Here, images taken at a certain time are placed at the measured height position corresponding to the same time, and the path measured by the IMU is used to take swaying and rotation about the own axis of the sensor head 101 into account. The first placement is thus based on tracking the sensor head 101. Next, a correction is performed on the rough placement 509 by means of the correction module 504. An Iterative Closest Point, ICP, algorithm is for example used to compare overlapping pieces in the images, and to in this way refine the placement or correct for errors or inaccuracies. This results in a corrected placement 510 of the images in the virtual space. The 3D model 510 of the shaft, corresponding to the corrected placement 510, is then visualized for a user in the visualization module 505. By using measured RGB information, color values may be added to the 3D model 510 as well.

In another embodiment, the placement module 503 uses the measured images 506 and the measured height position 507 to perform a rough placement 509 of the images in the virtual space, taking into account the position of the image sensors 400 on the sensor head 101. The rough placement 509 is then corrected by the correction module 504 in two ways. On the one hand, the placement 509 is corrected for swaying of the sensor head, by means of the measured deviation 508, derived from the path measured by the IMU. On the other hand, the rough placement 509 is corrected for rotations of the sensor head about its own axis, by means of an ICP algorithm. The ICP algorithm compares here parts of images overlapping over the height, and searches for similar characteristics in the overlapping parts regarding color and/or depth information. The circumferential position of the images is then corrected, so that corresponding characteristics coincide as closely as possible. Both corrections, of which the order may differ, result in a corrected placement 510 of the images in the virtual space, which may be visualized in a visualization module 505.

Other embodiments are possible, e.g. wherein no IMU 502 is present and corrections are purely based on an ICP algorithm, or wherein an IMU 502 is present in the sensor head 101, while no ICP-based corrections are done.

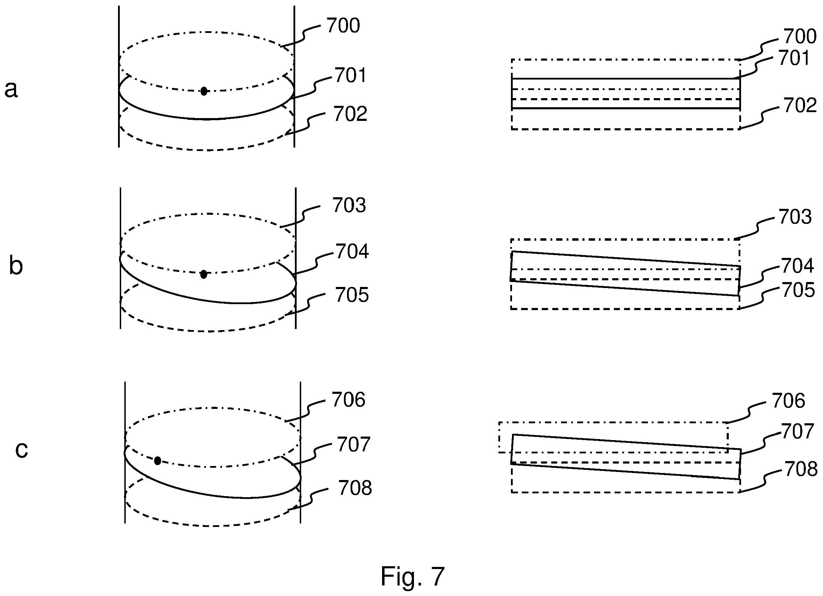

Fig. 6 and 7 illustrate furthermore a possible action of the placement module 503 and correction module 504, and how these take into account swaying of the sensor head 101 and rotations about its own axis. Fig. 6a illustrate a descent of the sensor head 101, with successive height positions 600, 601 and 602, where no swaying or rotations occur. In Fig. 6b a rotation of the sensor head 101 about its own axis 603 occurs, but no swaying. Swaying means that a deviation 606 occurs with respect to a vertical axis 603. Fig. 6c illustrates how the processing unit 500 assumes a measured height position 605 when the occurring swaying would not be taken into account, while the image taken by the respective sensor 400 is actually located at a height position 604. This would result in an inaccurate placement of the images in the virtual space.

Fig. 7 illustrates how the placement of the images may be corrected for rotations and swaying. No swaying or rotation of the sensor head 101 occur in the situation of Fig. 7a during the descent. A ring of images is measured at three different height positions, see the rings 700, 701 and 702 at the left in Fig. 7a. Fig. 7a illustrates the placement of the images in the virtual space, where for the sake of simplicity of representation the circumferential direction is projected on the horizontal direction. It suffices in Fig. 7a to place the measured rings 700, 701 and 702 in the virtual space only taking into account the measured height positions.

Fig. 7b illustrates a situation where swaying of the sensor head 101 occurs during the descent of the sensor head 101. Among the measured ring of images 703, 704, 705, the ring 704 shows a tilt as a result of swaying of the sensor head 101 at the place where the ring 704 was measured. When in this situation the rings 703, 704, 705 are placed in the virtual space only taking into account the measured height position, this results in an inaccurate placement. Fig. 7b, at the right, illustrates how, to obtain an accurate placement, the image should be tilted in the virtual space as well. This may be done by taking into account a measured deviation of the sensor head 606, which may for example be derived from the path measured by an IMU.

Fig. 7c illustrates a situation where a rotation of the sensor head 101 about its own axis and swaying of the sensor head 101 occur during the descent. The ring of images 706 was taken at a height position where the sensor head 101 was twisted. The ring of images 707 was taken at a height position where the sensor head 101 was tilted. The ring of images 708 was taken at a height position where the sensor head 101 was neither twisted nor tilted. Analogous with Fig. 7b, Fig. 7c illustrates, at the right, how the image 707 should be placed in the virtual space in a tilted fashion in order to take into account swaying of the sensor head 101. On the other hand, the image 706 should be rotated in the virtual space with respect to the other images 707, 708 in order to take into account the rotation of the sensor head 101. In the projected representation of Fig. 7b, at the right, it may be seen as a shift of the image 706 with respect to the other images 707, 708. The rotated placement of the image 706 in the virtual space may for example occur based on rotation information measured by an IMU, or by means of an ICP algorithm which compares images partially overlapping in the height direction.

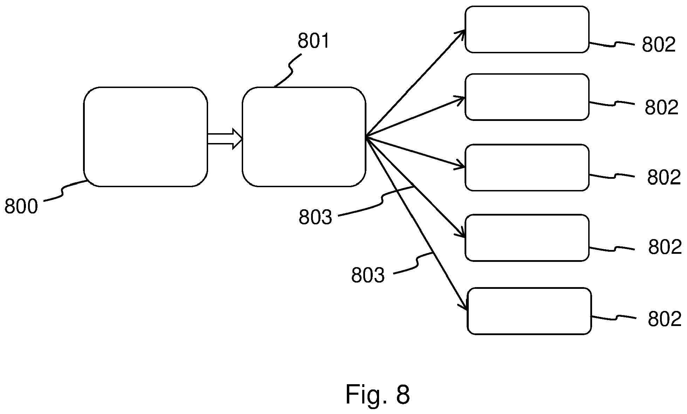

Fig. 8 illustrates further processing possibilities once the 3D model of the shaft 105 has been determined in the virtual space. Fig. 8, the starting point is rough data 800, which is available in the form of a point cloud, if necessary supplemented with color information. Optionally, the 3D images are filtered, to reduce the noise present. A parametrization 801 is then performed based on the rough data 800, allowing to derive dimensional parameters from the 3D model. A user interface allows for example to make cuts in the model, and distances and/or areas are calculated automatically for this. Certain shapes may also be recognized automatically, such as the presence of a pipeline connecting to the shaft. Optionally, image recognition algorithms may be used to derive information regarding the structural condition of the shaft based on colors present in the model. Certain defects, such as a missing stone, leak, water seepage, etc., may be recognized automatically in the 3D model.

Finally, Fig. 8 illustrates how information present in or obtained from the 3D model may be made available for other applications 802, for example through an API 803. An application 802 is for example a database assessing the manholes of the sewage system, or a GIS viewer (Geographic Information System) where the geographical location of manholes is represented visually.

Although the present invention was illustrated by means of specific embodiments, it will be clear for the person skilled in the art that the invention is not limited to the details of the foregoing illustrative embodiments, and that the present invention may be executed with different modifications and adaptations without departing from the scope of the invention. The present embodiments should therefore in all respects be considered as illustrative and not restrictive, wherein the scope of the invention is defined by the attached claims and not by the foregoing description, and all modifications which fall within the scope of the claims are therefore included. Moreover, the reader of this patent application will understand that the words "comprising" or "to comprise" do not exclude other elements or other steps, and that the word "a(n)" does not exclude plural. Possible references in the claims may not be understood as a limitation of the respective claims. The terms "first", "second", "third", "a", "b", "c" and the like, when used in the description or in the claims, are used to distinguish between similar elements or steps and do not necessarily describe a successive or chronological order. The terms "top", "bottom", "over", "under" and the like are used in the same way with respect to the description and do not refer necessarily to relative positions. It should be understood that these terms are mutually interchangeable under the right conditions and the embodiments of the invention are able to function according to the present invention in other orders or orientations than those described or illustrated in the above.

## Claims

1. An apparatus for modelling a shaft (105) in 3D, comprising:
- a sensor head (101) adapted to be axially moved within said shaft (105) by means of a suspension system (100), said sensor head (101) comprising:
∘ 3D sensors (400) placed along the circumference of said sensor head (101), adapted to take images (506) along an inner circumference of said shaft (105), each of said images (506) comprising depth information about the part of the inner surface of said shaft (105) within the field of view of the respective 3D sensor (400);
∘ a measuring apparatus (501) adapted to determine a measured height position (507) of said sensor head (101) within said shaft (105);
- a processing unit (500) comprising:
∘ a placement module (503) configured to place said images (506) in a virtual space, based on said measured height position (507) and the positioning of said image sensors (400) on said sensor head (101), resulting in a rough placement (509) of said images (506), thereby obtaining a first reconstruction (509) of the inner surface of said shaft (105);
∘ a correction module (504) configured to correct said rough placement (509), based on comparing overlapping images and/or based on a measured deviation (606) of said sensor head (101) with respect to a central axis (603) of said shaft (105), resulting in a 3D model (510) of said shaft (105).

2. An apparatus according to claim 1,
wherein said apparatus comprises a second measuring apparatus (502) adapted to determine said measured deviation (606) by reconstruction of the path followed by said sensor head (101).

3. An apparatus according to claim 2,
wherein said placement module (503) is configured to place said images (506) in said virtual space based on said path, and wherein said correction module (504) is configured to correct said rough placement (509) based on comparing overlapping images.

4. An apparatus according to claim 3,
wherein said second measuring apparatus (502) is an inertia measuring unit, and/or comprises an accelerometer, and/or comprises a gyroscope, and/or comprises a magnetometer.

5. An apparatus according to any of the preceding claims,
wherein said correction module (504) is configured to correct the placement of said images on a circumferential position in said virtual space, based on comparing images overlapping in said rough placement (509) in the height direction.

6. An apparatus according to claim 5,
wherein said correction module (504) is configured to correct said rough placement (509) by minimizing the difference between point clouds.

7. An apparatus according to any of the preceding claims,
wherein said 3D sensors (400) use 3D imaging technology.

8. An apparatus according to claim 7,
wherein said 3D sensors (400) use a combination of stereovision technology and the projection of a structured light pattern.

9. An apparatus according to any of the preceding claims,
wherein said 3D sensors (400) are placed on said sensor head (101) according to a same height position on said sensor head (101).

10. An apparatus according to any of the preceding claims,
wherein said measuring apparatus (501) is adapted to determine said measured height position based on 3D imaging technology.

11. An apparatus according to any of the preceding claims,
wherein said processing unit (500) forms a physical unit with said sensor head (101).

12. An apparatus according to any of the preceding claims,
wherein said processing unit (500) is adapted to determine dimensional parameters based on said placement of said images in said virtual space, said dimensional parameters being derived from said 3D model (510) of said shaft (105).

13. A system for modelling a shaft (105) in 3D, comprising:
- an apparatus according to any of the preceding claims;
- a suspension system (100) adapted to move said sensor head (101) axially within said shaft (105), comprising a mobile component chosen from the group of: a bar, a telescopic arm (200), or one or multiple cables (300, 202), wherein said mobile component is adapted to be manually held in position (303) or to be connected to a movable positioning system (201, 203, 301) during said axial movement of said sensor head (101).

14. A method for modelling a shaft (105) in 3D, comprising:
- moving a sensor head (101) axially within said shaft (105) by means of a suspension system (100);
- taking images (506) by means of 3D sensors (400), wherein said 3D sensors (400) are placed along the circumference of said sensor head (101) and are adapted to take said images (506) along an inner circumference of said shaft (105), and wherein each of said images (506) comprises depth information about the part of the inner surface of said shaft (105) within the field of view of the respective 3D sensor (400);
- determining a measured height position of said sensor head (101) within said shaft (105) by means of a measuring apparatus (501) comprised within said sensor head (101);
- placing said images (506) in a virtual space based on said measured height position and positioning said image sensors (400) on said sensor head (101), resulting in a rough placement (509) of said images (506), thereby obtaining a first reconstruction (509) of the inner surface of said shaft (105);
- correcting said rough placement (509) based on comparing overlapping images and/or based on a measured deviation (606) of said sensor head (101) with respect to a central axis (603) of said shaft (105), resulting in a 3D model (510) of said shaft (105).

## Patentansprüche

1. Vorrichtung zum Modellieren einer Welle (105) in 3D, umfassend:
- einen Sensorkopf (101), der angepasst ist, um mittels eines Aufhängungssystems (100) axial innerhalb der Welle (105) bewegt zu werden, der Sensorkopf (101) umfassend:
o 3D-Sensoren (400), die entlang des Umfangs des Sensorkopfs (101) platziert und angepasst sind, um Bilder (506) entlang eines inneren Umfangs der Welle (105) aufzunehmen, jedes der Bilder (506) umfassend Tiefeninformationen über den Teil der inneren Oberfläche der Welle (105) innerhalb des Sichtfelds des jeweiligen 3D-Sensors (400);
o eine Messvorrichtung (501), die angepasst ist, um eine gemessene Höhenposition (507) des Sensorkopfs (101) innerhalb der Welle (105) zu bestimmen;
- eine Verarbeitungseinheit (500), umfassend:
o ein Platzierungsmodul (503), das konfiguriert ist, um die Bilder (506) basierend auf der gemessenen Höhenposition (507) und dem Positionieren der Bildsensoren (400) an dem Sensorkopf (101) in einem virtuellen Raum zu platzieren, was in einer groben Platzierung (509) der Bilder (506) resultiert, wodurch eine erste Rekonstruktion (509) der Innenfläche der Welle (105) erlangt wird;
o ein Korrekturmodul (504), das konfiguriert ist, um die grobe Platzierung (509) basierend auf einem Vergleichen überlappender Bilder und/oder basierend auf einer gemessenen Abweichung (606) des Sensorkopfs (101) in Bezug auf eine Mittelachse (603) der Welle (105) zu korrigieren, was in einem 3D-Modell (510) der Welle (105) resultiert.

2. Vorrichtung nach Anspruch 1,
wobei die Vorrichtung eine zweite Messvorrichtung (502) umfasst, die angepasst ist, um die gemessene Abweichung (606) durch Rekonstruktion des von dem Sensorkopf (101) zurückgelegten Wegs zu bestimmen.

3. Vorrichtung nach Anspruch 2,
wobei das Platzierungsmodul (503) konfiguriert ist, um die Bilder (506) basierend auf dem Pfad in dem virtuellen Raum zu platzieren, und wobei das Korrekturmodul (504) konfiguriert ist, um die grobe Platzierung (509) basierend auf einem Vergleich überlappender Bilder zu korrigieren.

4. Vorrichtung nach Anspruch 3,
wobei die zweite Messvorrichtung (502) eine Trägheitsmesseinheit ist und/oder einen Beschleunigungsmesser umfasst und/oder ein Gyroskop umfasst und/oder ein Magnetometer umfasst.

5. Vorrichtung nach einem der vorhergehenden Ansprüche,
wobei das Korrekturmodul (504) konfiguriert ist, um die Platzierung der Bilder basierend auf einem Vergleichen von Bildern, die sich in der groben Platzierung (509) in der Höhenrichtung überlappen, an einer Umfangsposition in dem virtuellen Raum zu korrigieren.

6. Vorrichtung nach Anspruch 5,
wobei das Korrekturmodul (504) konfiguriert ist, um die grobe Platzierung (509) durch Minimieren der Differenz zwischen Punktwolken zu korrigieren.

7. Vorrichtung nach einem der vorhergehenden Ansprüche, wobei die 3D-Sensoren (400) eine 3D-Bildgebungstechnik verwenden.

8. Vorrichtung nach Anspruch 7,
wobei die 3D-Sensoren (400) eine Kombination aus Stereovisionstechnik und der Projektion eines strukturierten Lichtmusters verwenden.

9. Vorrichtung nach einem der vorhergehenden Ansprüche,
wobei die 3D-Sensoren (400) gemäß einer gleichen Höhenposition an dem Sensorkopf (101) an dem Sensorkopf (101) platziert sind.

10. Vorrichtung nach einem der vorhergehenden Ansprüche,
wobei die Messvorrichtung (501) angepasst ist, um die gemessene Höhenposition basierend auf 3D-Bildgebungstechnik zu bestimmen.

11. Vorrichtung nach einem der vorhergehenden Ansprüche,
wobei die Verarbeitungseinheit (500) eine physische Einheit mit dem Sensorkopf (101) bildet.

12. Vorrichtung nach einem der vorhergehenden Ansprüche,
wobei die Verarbeitungseinheit (500) angepasst ist, um Dimensionsparameter basierend auf der Platzierung der Bilder in dem virtuellen Raum zu bestimmen, wobei die Dimensionsparameter von dem 3D-Modell (510) der Welle (105) abgeleitet sind.

13. System zum Modellieren einer Welle (105) in 3D, umfassend:
- eine Vorrichtung nach einem der vorhergehenden Ansprüche;
- ein Aufhängungssystem (100), das angepasst ist, um den Sensorkopf (101) axial innerhalb der Welle (105) zu bewegen, umfassend eine bewegliche Komponente, die ausgewählt ist aus der Gruppe, bestehend aus: einer Stange, einem Teleskoparm (200) oder einem oder mehreren Kabeln (300, 202), wobei die bewegliche Komponente angepasst ist, um während der axialen Bewegung des Sensorkopfs (101) manuell in Position (303) gehalten zu werden oder mit einem beweglichen Positionierungssystem (201, 203, 301) verbunden zu werden.

14. Verfahren zum Modellieren einer Welle (105) in 3D, umfassend:
- Bewegen eines Sensorkopfs (101) axial innerhalb der Welle (105) mittels eines Aufhängungssystems (100);
- Aufnehmen von Bildern (506) mittels 3D-Sensoren (400), wobei die 3D-Sensoren (400) entlang des Umfangs des Sensorkopfs (101) platziert sind und angepasst sind, um die Bilder (506) entlang eines inneren Umfangs der Welle (105) aufzunehmen, und wobei jedes der Bilder (506) Tiefeninformationen über den Teil der inneren Oberfläche der Welle (105) in das Sichtfeld des jeweiligen 3D-Sensors (400) umfasst;
- Bestimmen einer gemessenen Höhenposition des Sensorkopfs (101) innerhalb der Welle (105) mittels einer Messvorrichtung (501), die innerhalb des Sensorkopfs (101) umfasst ist;
- Platzieren der Bilder (506) in einem virtuellen Raum basierend auf der gemessenen Höhenposition und Positionieren der Bildsensoren (400) an dem Sensorkopf (101), was in einer groben Platzierung (509) der Bilder (506) resultiert, wodurch eine erste Rekonstruktion (509) der inneren Oberfläche der Welle (105) erlangt wird;
- Korrigieren der groben Platzierung (509) basierend auf einem Vergleichen überlappender Bilder und/oder basierend auf einer gemessenen Abweichung (606) des Sensorkopfs (101) in Bezug auf eine Mittelachse (603) der Welle (105), was in einem 3D-Modell (510) der Welle (105) resultiert.

## Revendications

1. Appareil pour la modélisation d'un arbre (105) en 3D, comprenant :
- une tête de capteur (101) conçue pour être déplacée axialement à l'intérieur dudit arbre (105) au moyen d'un système de suspension (100), ladite tête de capteur (101) comprenant :
∘ des capteurs 3D (400) placés le long de la circonférence de ladite tête de capteur (101), conçus pour prendre des images (506) le long d'une circonférence interne dudit arbre (105), chacune desdites images (506) comprenant des informations de profondeur sur la partie de la surface interne dudit arbre (105) dans le champ de vision du capteur 3D respectif (400) ;
∘ un appareil de mesure (501) conçu pour déterminer une position en hauteur mesurée (507) de ladite tête de capteur (101) à l'intérieur dudit arbre (105) ;
- une unité de traitement (500) comprenant :
∘ un module de placement (503) configuré pour placer lesdites images (506) dans un espace virtuel, sur la base de ladite position en hauteur mesurée (507) et du positionnement desdits capteurs d'image (400) sur ladite tête de capteur (101), en conduisant à un placement approximatif (509) desdites images (506), ce qui permet d'obtenir une première reconstitution (509) de la surface interne dudit arbre (105) ;
∘ un module de correction (504) configuré pour corriger ledit placement approximatif (509), sur la base d'une comparaison d'images superposées et/ou sur la base d'un écart mesuré (606) de ladite tête de capteur (101) par rapport à un axe central (603) dudit arbre (105), en conduisant à un modèle 3D (510) dudit arbre (105).

2. Appareil selon la revendication 1,
ledit appareil comprenant un second appareil de mesure (502) conçu pour déterminer ledit écart mesuré (606) par reconstitution du trajet suivi par ladite tête de capteur (101).

3. Appareil selon la revendication 2,
ledit module de placement (503) étant configuré pour placer lesdites images (506) dans ledit espace virtuel sur la base dudit trajet, et ledit module de correction (504) étant configuré pour corriger ledit placement approximatif (509) sur la base de la comparaison d'images superposées.

4. Appareil selon la revendication 3,
ledit second appareil de mesure (502) étant une unité de mesure d'inertie et/ou comprenant un accéléromètre et/ou comprenant un gyroscope et/ou comprenant un magnétomètre.

5. Appareil selon l'une quelconque des revendications précédentes,
ledit module de correction (504) étant configuré pour corriger le placement desdites images sur une position circonférentielle dans ledit espace virtuel, sur la base de la comparaison d'images superposées dans ledit placement approximatif (509) dans le sens de la hauteur.

6. Appareil selon la revendication 5,
ledit module de correction (504) étant configuré pour corriger ledit placement approximatif (509) en minimisant la différence entre les nuages de points.

7. Appareil selon l'une quelconque des revendications précédentes,
lesdits capteurs 3D (400) utilisant une technologie d'imagerie 3D.

8. Appareil selon la revendication 7,
lesdits capteurs 3D (400) utilisant une combinaison de technologie de stéréovision et de projection d'un motif lumineux structuré.

9. Appareil selon l'une quelconque des revendications précédentes,
lesdits capteurs 3D (400) étant placés sur ladite tête de capteur (101) en fonction d'une même position en hauteur sur ladite tête de capteur (101).

10. Appareil selon l'une quelconque des revendications précédentes,
ledit appareil de mesure (501) étant conçu pour déterminer ladite position en hauteur mesurée sur la base d'une technologie d'imagerie 3D.

11. Appareil selon l'une quelconque des revendications précédentes,
ladite unité de traitement (500) formant une unité physique avec ladite tête de capteur (101).

12. Appareil selon l'une quelconque des revendications précédentes,
ladite unité de traitement (500) étant conçue pour déterminer des paramètres dimensionnels sur la base dudit placement desdites images dans ledit espace virtuel, lesdits paramètres dimensionnels étant dérivés dudit modèle 3D (510) dudit arbre (105).

13. Système permettant la modélisation d'un arbre (105) en 3D, comprenant :
- un appareil selon l'une quelconque des revendications précédentes ;
- un système de suspension (100) conçu pour déplacer ladite tête de capteur (101) axialement à l'intérieur dudit arbre (105), comprenant un élément mobile choisi dans le groupe de : une barre, un bras télescopique (200), ou un ou plusieurs câbles (300, 202), ledit élément mobile étant conçu pour être maintenu manuellement en position (303) ou pour être relié à un système de positionnement mobile (201, 203, 301) pendant ledit déplacement axial de ladite tête de capteur (101).

14. Procédé permettant la modélisation d'un arbre (105) en 3D, comprenant :
- le déplacement axial d'une tête de capteur (101) à l'intérieur dudit arbre (105) au moyen d'un système de suspension (100) ;
- la prise d'images (506) au moyen de capteurs 3D (400), lesdits capteurs 3D (400) étant placés le long de la circonférence de ladite tête de capteur (101) et étant conçus pour prendre lesdites images (506) le long d'une circonférence intérieure dudit arbre (105), et chacune desdites images (506) comprenant des informations de profondeur sur la partie de la surface interne dudit arbre (105) dans le champ de vision du capteur 3D respectif (400) ;
- la détermination d'une position en hauteur mesurée de ladite tête de capteur (101) à l'intérieur dudit arbre (105) au moyen d'un appareil de mesure (501) compris dans ladite tête de capteur (101) ;
- le placement desdites images (506) dans un espace virtuel sur la base de ladite position en hauteur mesurée et le positionnement desdits capteurs d'images (400) sur ladite tête de capteur (101), qui conduit à un placement approximatif (509) desdites images (506), ce qui permet d'obtenir une première reconstitution (509) de la surface interne dudit arbre (105) ;
- la correction dudit placement approximatif (509) sur la base d'une comparaison d'images superposées et/ou sur la base d'un écart mesuré (606) de ladite tête de capteur (101) par rapport à un axe central (603) dudit arbre (105), qui conduit à un modèle 3D (510) dudit arbre (105).
